# EUROPEAN PATENT APPLICATION

(11) **EP 4 635 641 A1**
(43) Date of publication of application: **22.10.2025**
(21) Application number: 25153868.2
(22) Date of filing: 24.01.2025
(51) Int. Cl.: B08B 5/04, B08B 9/08, B60B 15/00

(54) **AUTOMATED CLEANING UNIT FOR BULK STORAGE AND TRANSPORT CONTAINERS**

(30) Priority: 17.04.2024 US 202418638265
(71) Applicant: Dimension Product Solutions LP, Crosby, TX 77532-6022 (US)
(72) Inventor: Cook, George T., CROSBY, 77562-6022 (US); Lusk, Burt, La Porte, 77571 (US)
(74) Representative: IPAZ

(57) **Abstract**

A cleaning unit configured for cleaning at least one storage container of a bulk transport vehicle, where the cleaning unit includes a chassis having a swivel connection defining a through-hole and a vacuum chamber, an air intake member and a pair of wheels attached to the chassis, where the wheels each include a motor and a vacuum attachment zone, and a processor on the chassis and coupled to the motor of each of the wheels, where a vacuum is generated within the vacuum chamber and in the vacuum attachment zones of the wheels so that the wheels suction and attach to an inner surface of a wall of the at least one storage container and the processor moves the chassis in multiple directions along the inner surface of the wall while the air intake member suctions and removes residual material from the inner surface of the wall.

## Description

### BACKGROUND

The present application relates generally to a cleaning system for bulk storage and bulk transport containers, and more particularly to an automated cleaning unit that moves along the inner surfaces of bulk storage and bulk transport containers to remove residual material and dust from the inner surfaces to efficiently clean the interiors of the bulk storage and transport containers.

Bulk transport vehicles, such as railcars, trucks and boats, include storage containers that are used to store and ship granular dry bulk solids, such as contaminant sensitive commodities, such as food materials, plastic pellets or other commodities, which require cleaning between shipments of various grades and types. A conventional cleaning process for cleaning the interiors of the storage and transport containers includes using pressurized (sometimes heated) water or water with chemical additives to wash the inner surfaces of the walls of the storage and transport containers. The dirty water resulting from this cleaning process must be contained, screened and treated. Similarly, the collected washed out residual materials and dust particles must be either disposed of or dried for recycling or disposal. Additionally, the interiors of the cleaned storage and transport containers must be dried using heated, pressurized air.

This cleaning process is performed manually, which increases time and costs and requires special equipment, facilities, permits and personnel. As such, this cleaning process is energy inefficient due to the number of stages, which yields waste water and waste materials that must be further treated to meet government standards for disposal or recycling. Further, this cleaning process is also environmentally risky due to the chemicals used to treat the water and inherent risk of treating water which will be released back into the environment that could contain chemicals or contaminants. This cleaning process also requires physical entry into the confined spaces of the storage containers, which is difficult, time-consuming and potentially dangerous.

Therefore, it is desirable to provide a cleaning system that enhances efficiency while reducing costs and reducing waste materials that require further processing after the cleaning process.

### SUMMARY

The present cleaning unit is configured for cleaning bulk storage and transport containers of bulk transport vehicles, such as railcars, trucks and boats, without requiring a person to enter and manually clean the bulk storage and transport containers. The cleaning unit is automated and moves along the inner surfaces of the bulk storage and transport containers according to predetermined directions and/or patterns to suction and remove residual material and dust from the inner surfaces to efficiently clean the interiors of the bulk storage and transport containers.

In an embodiment, a cleaning unit is provided and configured for cleaning at least one storage container of a bulk transport vehicle. The cleaning unit includes a chassis having a swivel connection defining a through-hole and a vacuum chamber in communication with the through-hole, an air intake member attached to the chassis and including a plurality of suction holes that extend to the vacuum chamber, a pair of wheels movably attached to opposing sides of the chassis, the wheels each including a motor and a vacuum attachment zone and a processor on the chassis and coupled to the motor of each of the wheels. In operation, a vacuum is generated within the vacuum chamber and in the vacuum attachment zones of the wheels so that the wheels suction and attach to an inner surface of a wall of the at least one storage container and the processor causes the wheels to rotate to move the chassis in multiple directions along the inner surface of the wall while the air intake member suctions and removes residual material from the inner surface of the wall.

In another embodiment, a cleaning system is provided and configured for cleaning at least one storage container of a bulk transport vehicle. The cleaning system includes a plurality of cleaning units, where the cleaning units each include a chassis having a swivel connection defining a through-hole and a vacuum chamber in communication with the through-hole, an air intake member attached to the chassis and including a plurality of suction holes that extend to the vacuum chamber, a pair of wheels movably attached to opposing sides of the chassis, the wheels each including a motor and a vacuum attachment zone and a processor on the chassis and coupled to the motor of each of the wheels. In operation, a vacuum is generated within the vacuum chamber and in the vacuum attachment zones of the wheels of each of the cleaning units so that the wheels of each of the cleaning units suctions and attaches to an inner surface of a wall of the at least one storage container and the processor causes the wheels to rotate to move the chassis of each cleaning unit in multiple directions along the inner surfaces of the walls of the at least on storage container while the air intake member of each cleaning unit suctions and removes residual material from the inner surfaces of the walls.

### BRIEF DESCRIPTION OF THE DRAWINGS

Fig. 1 is a side view of a railcar showing the present cleaning unit in each of the storage containers of the railcar.
Fig. 2 is an end view of a storage container of the railcar of Fig. 1 showing multiple cleaning units in the storage container.
Fig. 3 is an enlarged perspective view of the cleaning unit.
Fig. 4 is a front view of the cleaning unit of Fig. 3.
Fig. 5 is a left side view of the cleaning unit of Fig. 3.
Fig. 6 is a top view of the cleaning unit of Fig. 3.
Fig. 7 is a bottom view of the cleaning unit of Fig. 3.
Fig. 8A is a perspective view of a wheel of the cleaning unit of Fig. 3.
Fig. 8B is an exploded perspective view of the wheel of Fig. 8A.
Fig. 9 is a cross-sectional view of the cleaning unit taken substantially along the line 9-9 in Fig. 6 in the direction generally indicated.
Fig. 10 is a cross-sectional view of a wheel of the cleaning unit taken substantially along the line 10-10 in Fig. 4 in the direction generally indicated.
Fig. 11 is an enlarged perspective view of another embodiment of the cleaning unit.
Fig. 12 is a front view of the cleaning unit of Fig. 11.
Fig. 13 is a top view of the cleaning unit of Fig. 11.
Fig. 14 is a bottom view of the cleaning unit of Fig. 11.
Fig. 15 is a side view of the cleaning unit of Fig. 1.
Fig. 16A is a perspective view of a wheel on the cleaning unit of Fig. 11.
Fig. 17 is a cross-sectional view of a wheel of the cleaning unit taken substantially along the line 17-17 in Fig. 12 in the direction generally indicated.

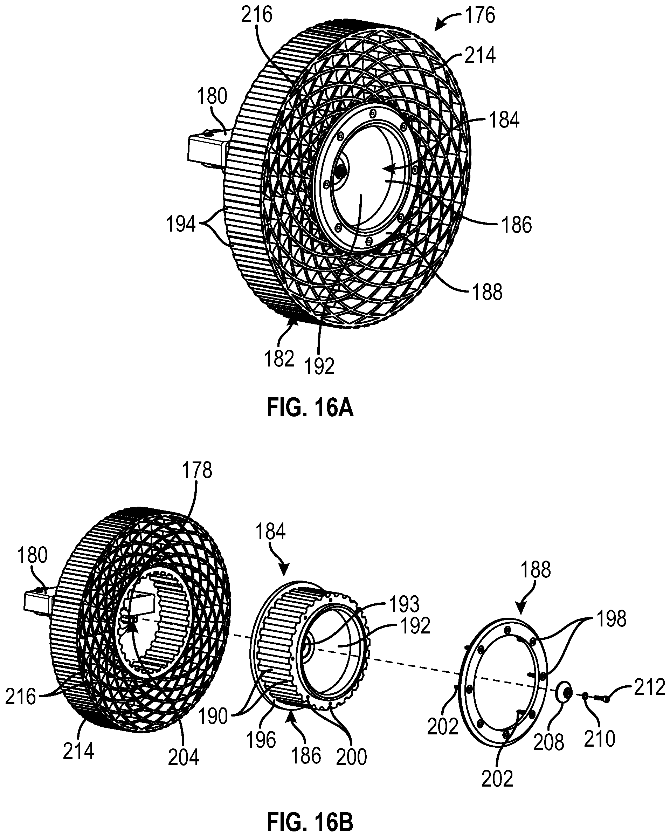

Fig. 16B is an exploded perspective view of the wheel of Fig. 16A.

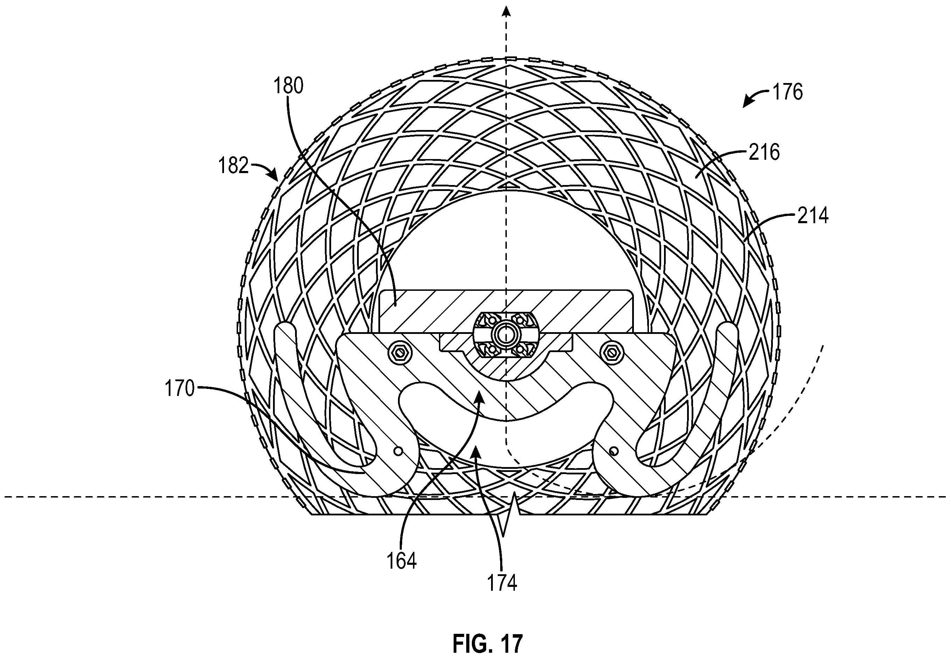

Fig. 17 is a side view of the wheel of Fig. 16A compressed on a surface of a wall inside of a storage container of a bulk transport vehicle.

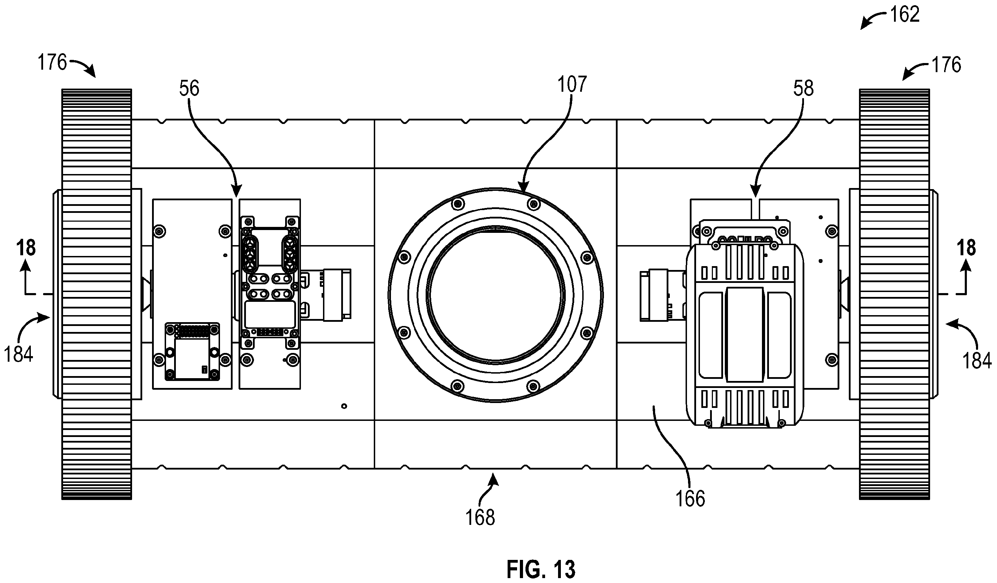

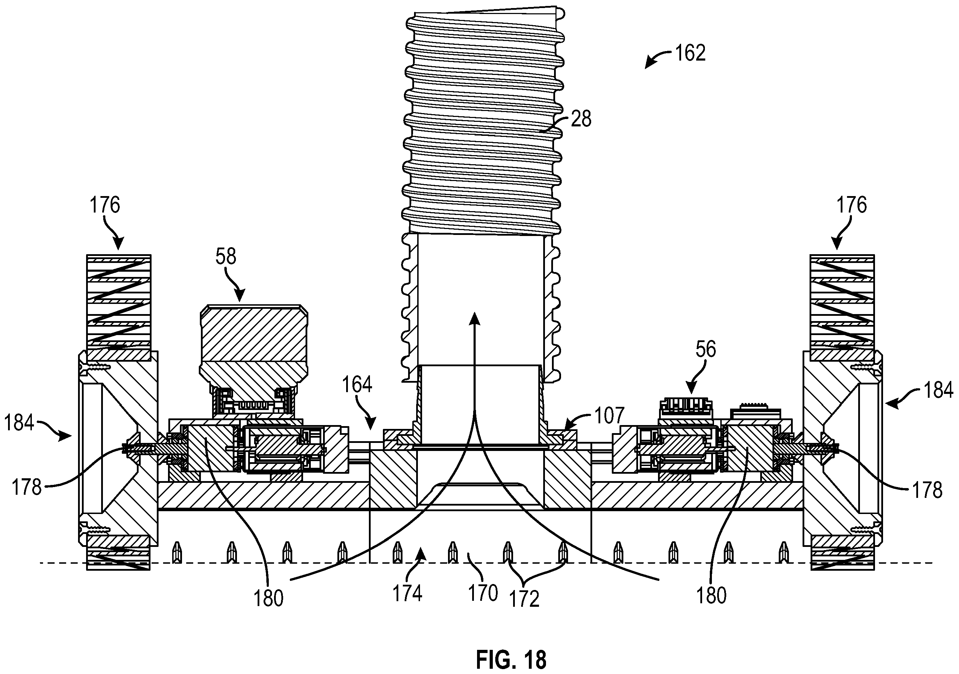

Fig. 18 is a cross-sectional view of the cleaning unit taken substantially along the line 918-18 in Fig. 13 in the direction generally indicated.

### DETAILED DESCRIPTION

The present cleaning system is configured for cleaning bulk storage and transport containers of bulk transport vehicles, such as railcars, trucks, pneumatic bulk trailers and boats, and other bulk storage containers, such as a hopper, silo or other storage container. The cleaning system includes at least one automated cleaning unit that moves along the inner surfaces of the bulk storage/transport containers (collectively referred to as "storage containers") to suction and remove residual material and dust from the inner surfaces to efficiently clean the interiors of the bulk storage and transport containers. The cleaning unit may also be used to remove liquid residue or slurry residue and/or combinations of these residues from the inner surfaces of the walls of a storage container.

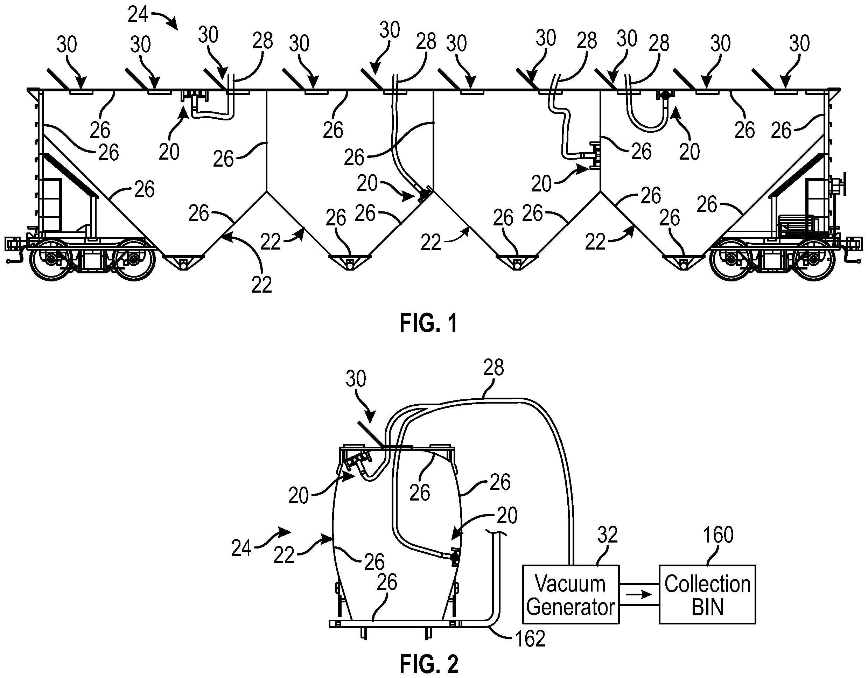

Referring now to Figs. 1 and 2, the present cleaning system includes at least one cleaning unit generally designated as 20, where the cleaning unit may be installed in one storage container 22 of a bulk transport vehicle 24, a plurality of storage containers 22 of a bulk transport vehicle 24 or in each storage container 22 of a bulk transport vehicle 24 as shown in Fig. 1. Alternatively, a plurality of the cleaning units 20 may be installed in a single storage container 22 as shown in Fig. 2. Furthermore, as described above, one or more of the cleaning units 20 may be used to clean other types of bulk storage containers, such as hoppers and silos. The storage containers 22 of bulk transport vehicles 24 become dirty due to residual product, such as bulk grains, powders or seeds, and/or dust that remains on the inner surfaces of the walls of the storage container after product is removed from the storage container 22. It is important to remove the residual product and dust from the inner surfaces of the walls before re-filling the storage container with another product so that there is no cross-contamination, which affects the quality, purity and consistency of the product filled and stored in the storage container. In an embodiment, the cleaning unit 20 is attached to a wall 26 inside the storage container 22. One end of a vacuum tube or vacuum hose 28 is attached to the cleaning unit 20 and an opposing end of the hose extends through an opening in a hatch 30 of the storage container 22 and is attached to a vacuum generator 32. In operation, the cleaning unit 20 is programmed to automatically move along the inner surfaces of the walls 26 of the storage container 22 and suction and remove residual product and/or dust from the inner surfaces of the walls. The removed residual product and/or dust moves through the vacuum hose 28 and into a collection unit 34, which stores the collected residual product and/or dust to be recycled or disposed of at a later time.

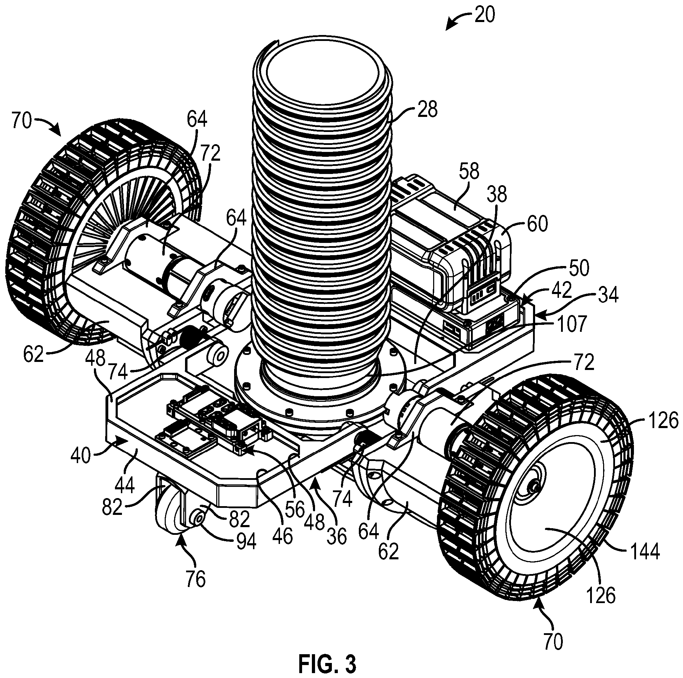

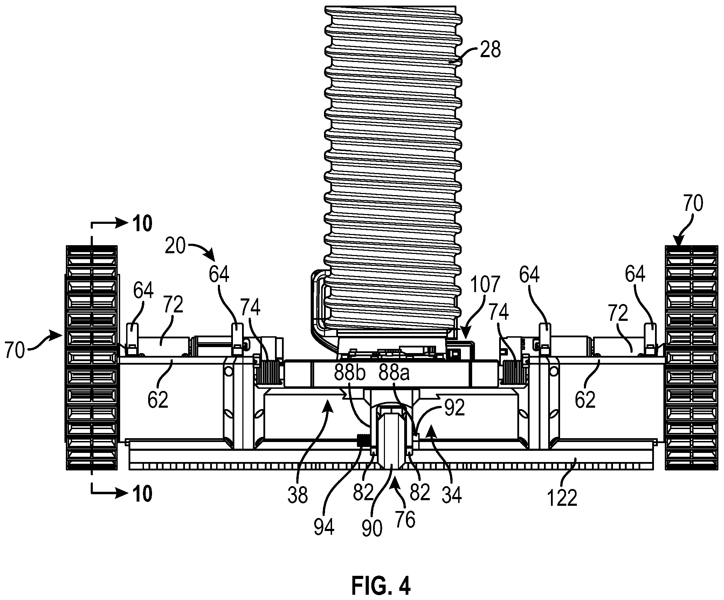

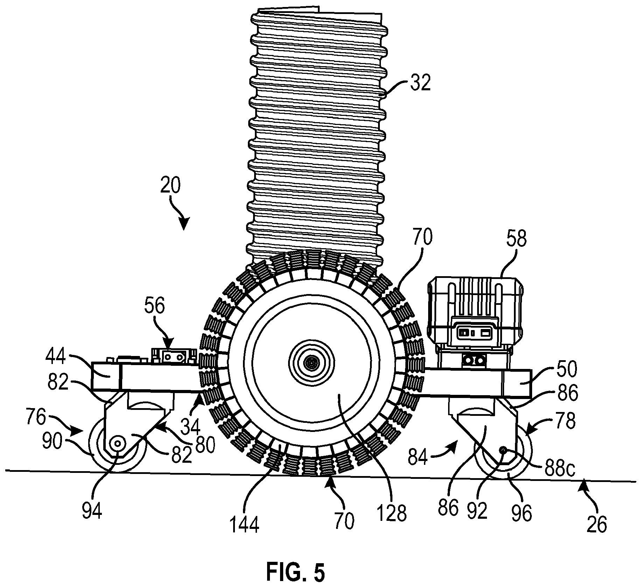

Referring to Figs. 3 to 10, an embodiment of the cleaning unit 20 is shown where the cleaning unit includes an outrigger or chassis 34 including a main body 36 with a central support member 38, front support member 40 attached to the central support member of the main body, and a rear support member 42 attached to a rear end of the central support member of the main body. The front support member 40 has a front frame 44 with a front recessed area 46 and opposing front arms 48 extending from the front frame 44, where the front arms 48 are attached to the main body 36 by fasteners, welding or any suitable attachment method. Similarly, the rear support member 42 has a rear frame 50 with a rear recessed area 52 and opposing rear arms 54 extending from the rear frame, where the rear arms 54 are attached to the main body 36 by fasteners, welding or any suitable attachment method.

In the illustrated embodiment, a control unit 56 comprised of one or more circuit boards 58 and electrical connectors, is seated in the front recessed area 46 and secured to the front frame 44 by fasteners. The control unit 56 wirelessly communicates with a processor, such as a computer, which is in a remote location, where the processor sends operational inputs, instructions and/or commands to the control unit for controlling the movement and operation of the cleaning unit 20. In an embodiment, the processor is at a control center and communicates with the control unit. The processor may also be in a portable device such as a portable handheld controller, a cellular device, a portable computer such as a laptop or tablet computer or any suitable device. In another embodiment, the control unit 56 also includes a unit processor that communicates with the processor at the remote location.

Electrical power is supplied to the control unit 56 and other parts of the cleaning unit 20 by a battery back 58 seated in the rear recessed area 52 and secured to the rear frame 50 by fasteners or other suitable attachment method. The battery pack 58 includes at least one rechargeable battery 60 that is removable from the rear frame 50 to be charged. In another embodiment, the battery pack 58 includes a plurality of rechargeable batteries 60. In operation, the electrical power generated by the battery pack 58 is transferred from the battery back to the electrical components of the cleaning unit 20 through electrical wiring coupled to electrical contacts on the upper surface of the rear recessed area 52, where the electrical contacts are aligned with and connected to electrical contacts on the bottom of the battery pack 58.

As shown in Figs. 3, 4, 6 and 7, the main body 36 includes opposing side support members 62 extending from the opposing sides of the central support member 38. The side support members 62 each include support flanges 64 that are spaced apart and attached to an upper surface of the side support members. The support flanges 64 on each side support member 62 define through-holes 66 that are aligned with each other and are configured to receive the axles 68 of wheels 70. Each axle 68 is coupled to a drive motor 72 that rotates the wheels 70 relative to the side support members 62 to enable the cleaning unit 20 to move along the inner surfaces of the walls 26 of a storage container 22. As shown in Fig. 3, a biasing member 74, such as a coil spring, is positioned between and secured to each side support member 62 and the front support member 40. The biasing members 74 help to maintain contact cleaning unit 20 and the inner surfaces of the walls 26 of the storage container 22 and ensure that the cleaning unit 20 is substantially perpendicular to the inner surfaces of the walls 26 during operation.

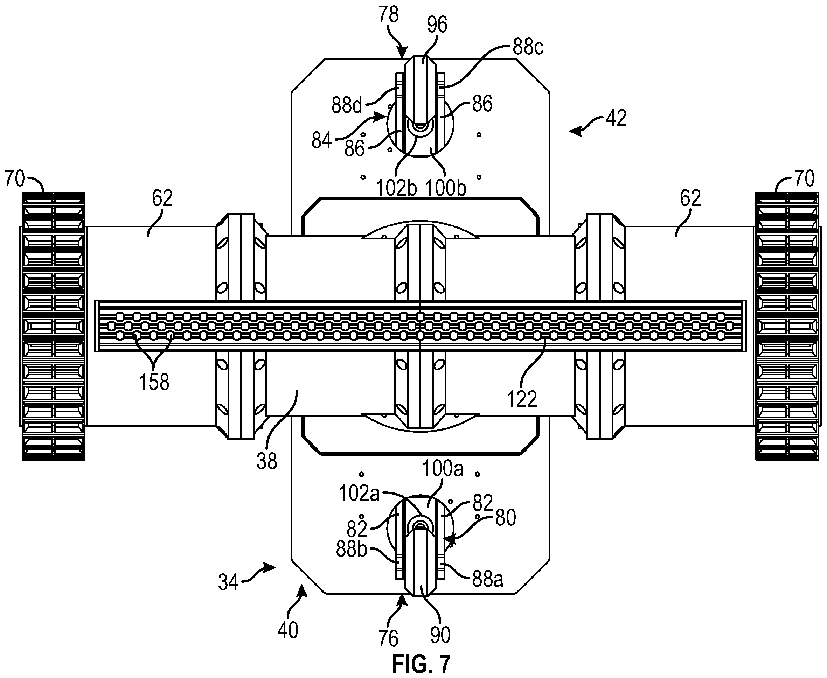

In addition to the wheels 70, a front wheel assembly 76 is mounted to a bottom surface of the front support member 40 and a rear wheel assembly 78 is mounted to a bottom surface of the rear support member 42. The front wheel assembly 76 includes a front wheel bracket 80 having flanges 82 that are spaced apart and the rear wheel assembly 78 includes a rear wheel bracket 84 having flanges 86 that are spaced apart. As shown, the flanges 82 and 86 of the front wheel bracket 80 and the rear wheel bracket 84 each include a through-hole 88a, 88b, 88c and 88d (Fig. 7), where the through-holes of the flanges 82 and 86 in the front wheel bracket 80 and the rear wheel bracket 84 are aligned with each other. A front wheel 90 includes a through-hole and is positioned between the flanges 82 of the front wheel bracket 80 so that the through-holes 88a, 88b of the flanges 82 are aligned with the through-hole of the front wheel 90. A fastener 92, such as bolt, is inserted through the aligned through-holes 88a, 88b, and is secured to front wheel bracket 80 by a nut 94, such as a lock nut. Similarly, a rear wheel 96 includes a through-hole and is positioned between the flanges 86 of the rear wheel bracket 84 so that the through-holes 88c, 88d of the flanges 86 are aligned with the through-hole 98 of the rear wheel 96. As described above, a fastener 92 is inserted through the aligned through-holes 88c, 88d and 98, and is secured to rear wheel bracket 84 by a nut 94.

The front wheel bracket 80 and the rear wheel bracket 84 each include an upper mounting plate 100a, 100b that extends between upper ends of the flanges 82, 86 where the upper mounting plate 100a of the front wheel bracket 80 and the upper mounting plate 100b of the rear wheel bracket 84 includes at least one through-hole 102a, 102b that is aligned with at least one through-hole in the front support member 40 and the rear support member 42. A fastener is inserted through the through-holes 102a, 102bs of the upper mounting plate 100a, 100b of the front wheel bracket 80 and the rear wheel bracket 84 and secured to the front support member 40 and the rear support member 42 by a nut or other suitable connector. Both the front wheel bracket 80 and the rear wheel bracket 84 are attached to the front support member 40 and the rear support member 42 so that the front wheel 90 rotates 360 degrees relative to the front support member 40 and the rear wheel 96 rotates 360 degrees relative to the rear support member 42.

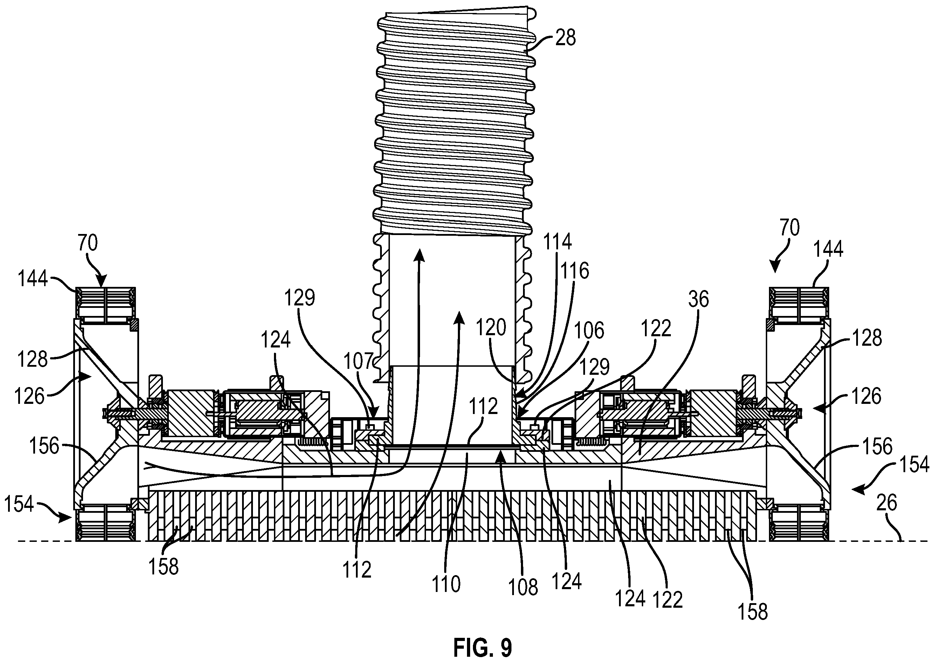

Referring to Figs. 3, 4, 6 and 7, the central support member 38 includes a central through-hole 106 and a swivel connector 107 including a bottom swivel connector 108 seated in the through-hole. The bottom swivel connector 108 includes a cylindrical wall 110 and a flange 112 extending outwardly from an upper end of the cylindrical wall 110 where the outer circumference of the flange 112 is greater than the inner diameter of the through-hole 106. Upon assembly, the wall 110 is inserted through the through-hole 106 until the flange 112 is seated on an upper surface of the central support member 38. The swivel connector 107 also includes an upper connector 114 that is positioned on the bottom swivel connector 108 and includes a cylindrical wall 116 and a flange 118 extending outwardly from an end of the wall. The upper connector 114 includes a through-hole 120 with an inner diameter that is approximately equal to an inner diameter of a through-hole 106 defined by the bottom swivel connector 108. As shown in Fig. 9, the flange 118 of the upper connector 114 is positioned between upper and lower lock rings 122, 124 that are aligned with each other and with the through-hole 106 of the central support member 38 so that the upper and lower lock rings are secured to the central support member by fasteners 129, such as bolts and nuts. The swivel connection between the upper connector 114 and the chassis 34 is configured so that the chassis 34 may pivot or rotate 360 degrees about a longitudinal axis extending through the upper connector 114. To minimize air leakage and thereby loss of vacuum through the swivel connection, the swivel connection has a low mechanical tolerance and low coefficient of friction between the contact surfaces of the bottom and upper connectors 108, 114 and the upper and lower lock rings 122, 124. In this way, the cleaning unit 20 may rotate and move in different directions along the inner surfaces of the walls of storage container while maintaining a secure, sealed connection with the vacuum hose 28 and the main body 36.

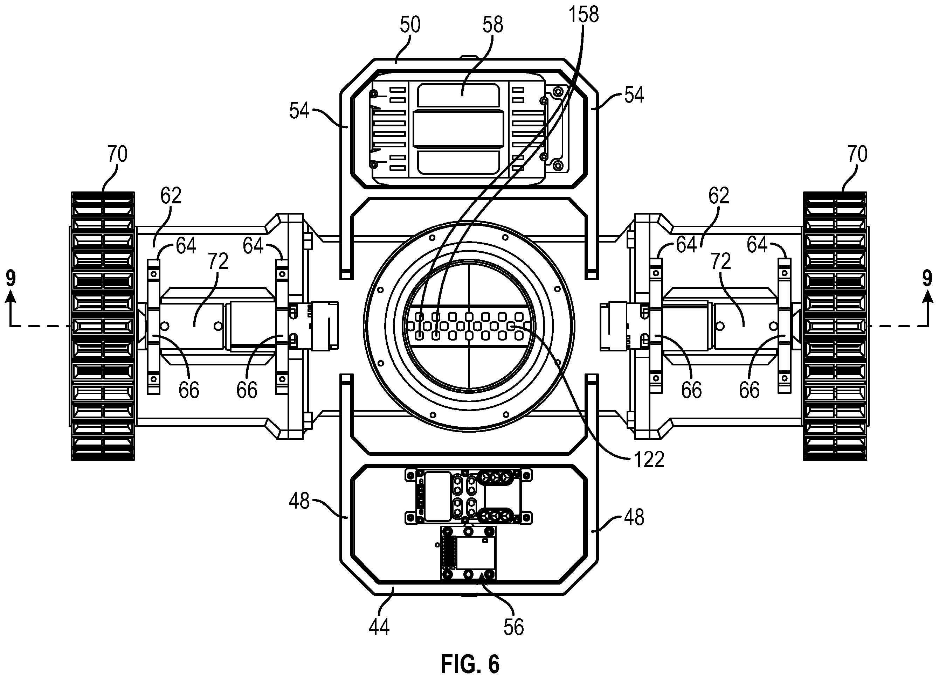

Referring to Figs. 6 and 7, a cleaning intake member 122 is positioned on the bottom surface of the main body 36 and has a generally rectangular shape. It should be appreciated that the cleaning intake member 122 may have any suitable shape. As shown, the cleaning intake member 122 includes a plurality of suction holes 124 that extend through the cleaning intake member and communicate with an internal vacuum chamber 126 formed between the main body 36 and the cleaning intake member 122. The vacuum chamber 126 is a closed, sealed chamber to maintain a desired vacuum pressure within the main body as described below. The cleaning intake member 122 is configured for specific materials. For example, the cleaning intake member 122 may include a squeegee and/or a wiper for removing liquids, brushes or bristles for dry materials or a combination of a squeegee, a wiper, brushes and bristles for a slurry material. Alternatively, the squeegee, the wiper, the brushes and/or the bristles may be removably connected to the cleaning intake member 122 for removing the above materials.

Each of the wheels 70 has an axle 68 including a drive motor 72 as described above and a hub 126 having a hub body 128 with a plurality of rectangular openings 130 on the outer peripheral surface of the hub body and a central through-hole 132. Each axle 68 includes a post 134 having a threaded bore 136 that extends from an end of the axle and is inserted through the through-hole 132 of the corresponding hub body 128 and is secured to the hub body 128 by a cap 138 and a washer 140, which each have a through-hole, and a threaded fastener 142 that is inserted through the through-holes of the washer 140 and the cap 138 and threadingly engages the threaded bore 136 of the post 134.

The wheels 70 also each include a segmented tire 144 having an inside diameter that is substantially equal to an outer diameter of the hub body 128, where the tire is secured to the outer surface of the hub body. More specifically, the inner surface of the tire 144 includes a plurality of rectangular protrusions 146 that engage the corresponding openings 130 on the hub body 128 to secure the tire to the hub body. The outer peripheral surface of the tire 144 also includes a plurality of rectangular openings 148 that lead to through-holes that extend from the outer peripheral surface 150 through the rectangular protrusions 146 to the inner surface 152 of the tire. As described below, a vacuum is generated within the main body 36 and in the wheels 70 so that suction is generated between the wheels and the inner surfaces of the walls 26 of the storage container 22 to hold the cleaning unit 20 on the walls 26 during operation of the cleaning unit.

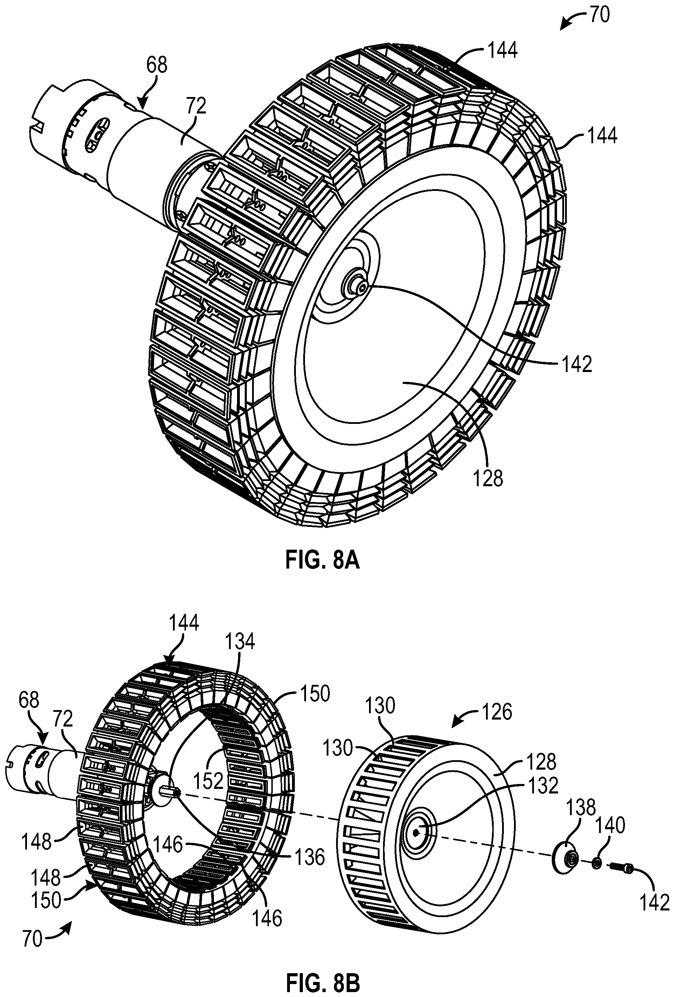

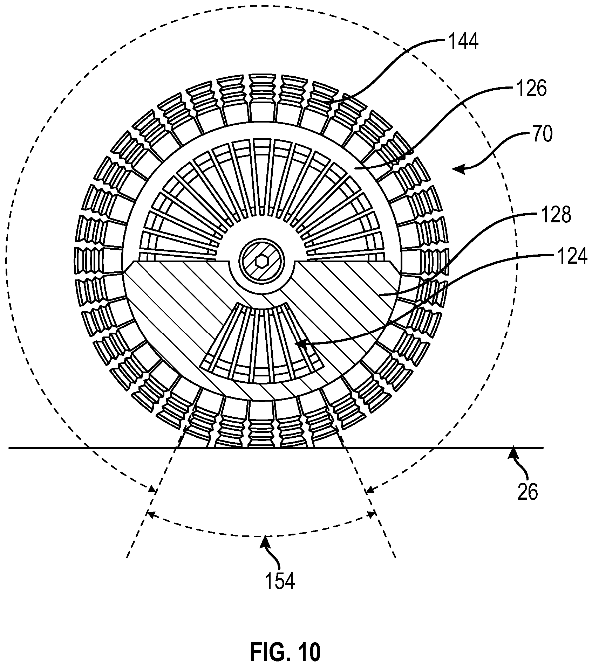

The segmented wheels 70 utilize a vacuum created by the vacuum generator 32 to create suction or traction between the wheels 70 and the inner surfaces of the walls 26 of a storge container 22 so that the cleaning unit 20 is secured to and able to move along the inner surfaces of the walls. As shown in Figs. 8A, 8B, 9 and 10, the wheels 70 are configured to have a vacuum attachment zone 154 (Fig. 10) that is in a designated radial area of the wheels 70 and adjacent to the inner surfaces of the walls 26 of a storage container 22. In this way, the vacuum attachment zone 154 helps to prevent a vacuum from being generated through the entire outer peripheral surfaces of the wheels 70, which would result in a vacuum leak or a weaker vacuum within the wheels such that the wheels would not have sufficient suction, i.e., traction, with the inner surfaces of the walls 26 to attach the cleaning unit 20 to the inner surfaces of the walls 26.

As shown in Fig. 9, the vacuum hose 28 is attached to the upper connector 114 of the chassis 34, where the swivel connection of the upper connector 114 with the chassis 34 enables the vacuum hose 28 to rotate 360 degrees relative to the chassis 34 to help prevent entanglement and/or binding of the vacuum hose during movement of the cleaning unit 20 in multiple directions inside a storage container. Activating the vacuum generator 32, which is located outside of the storage container 22 or at another location, creates a predetermined vacuum within the vacuum hose 28 and the cleaning unit 20. Specifically, the hub body 128 of each wheel 70 includes a conical wall 156 that divides inner space of each wheel so that incoming air flow through the segmented tires 144 of the wheels 70 only occurs in the vacuum attachment zone 154 adjacent to the inner surfaces of the walls 26 of the storage container 22. The vacuum generated within the vacuum hose 28 and the cleaning unit 20 causes air to flow through the vacuum attachment zone 154 of each segmented tire 144 and into the vacuum chamber 124 within the main body 36 and simultaneously through the suction holes 158 in the air intake member 122. As described above, the vacuum generated in the vacuum attachment zones 154 of the wheels 70 creates suction between the wheels 70 and the inner surfaces of the walls 26 to securely attach the cleaning unit 20 to the inner surfaces of the walls 26 while enabling the cleaning unit 20 to move in several different directions along the inner surfaces of the walls 26. The vacuum within the cleaning unit 20 simultaneously causes air to flow inwardly through the suction holes 158 of the air intake member 122 to vacuum and remove residual product and/or dust from the inner surfaces of the wall 26. The removed residual product and/or dust moves through the main body 36 and the vacuum hose 28 to a collection bin 160 associated with the vacuum generator 32 or to a separate collection bin. The collected residual product and/or dust is recycled or disposed of depending on the type and quality of the product that is collected.

In operation, the vacuum generator 32 is activated (the power is turned on) and a vacuum is generated within the cleaning unit 20 via the vacuum hose 28. The cleaning unit 20 is inserted through an opening in a hatch of a storage container 22 of a bulk transport vehicle 24 and attached to an inner surface of a wall 26 of the storage container 22 by placing the vacuum attachment zones 154 of the wheels 70 against the inner surface. Once attached to the inner surface of the wall 26 of the storage container 22, the movement of the cleaning unit 20 is remotely controlled from outside the storage container 22 or from another remote location such as a control center. In an embodiment, a computer program (set of commands or instructions) is sent to the processor of the cleaning unit 20 to move the cleaning unit in predetermined directions and/or in predetermined patterns along the inner surfaces of the walls 26 of the storage container 22. As the cleaning unit 20 moves along the inner surfaces of the walls 26 of the storage container 22, the air intake member 122 vacuums (suctions) and removes residual product and/or dust from the inner surfaces of the walls. The segmented wheels 70 and swiveling chassis 34 enable the cleaning unit 20, and more specifically, the air intake member 122, to remain substantially perpendicular to the inner surfaces of the walls 26 of the storage container 22 to effectively remove the residual product and/or dust from the inner surfaces. Furthermore, the configuration of the segmented wheels 70 enables the cleaning unit 20 to attach to and move along all of the inner surfaces of the walls 26 of the storage container 22 including bottom walls, sidewalls, top walls or ceilings where the walls may be straight walls and walls having different angles.

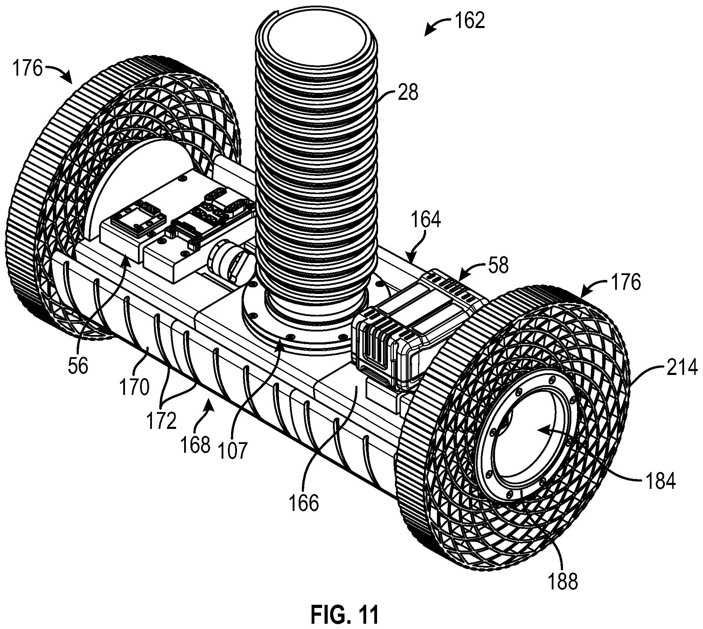

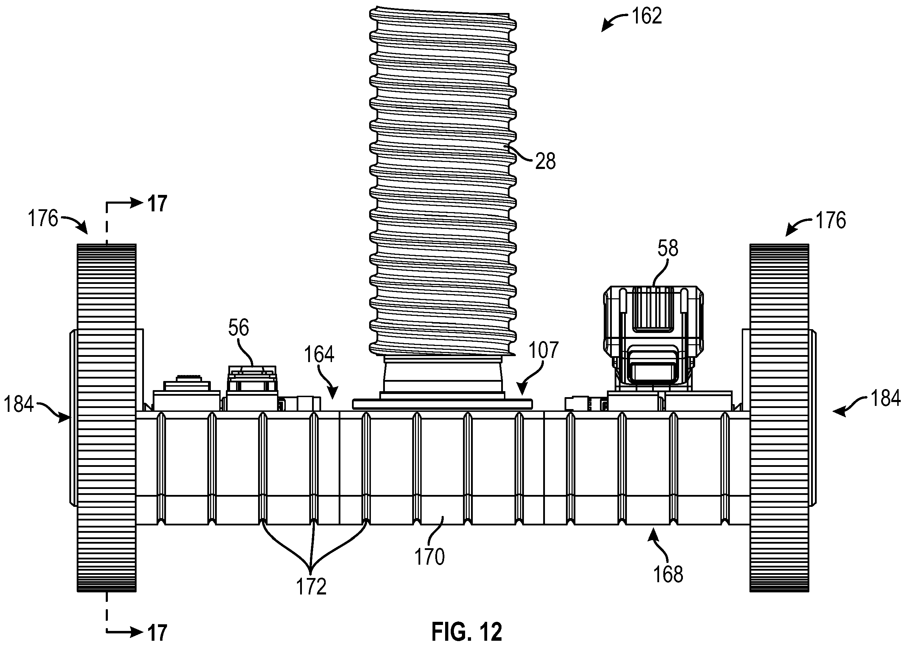

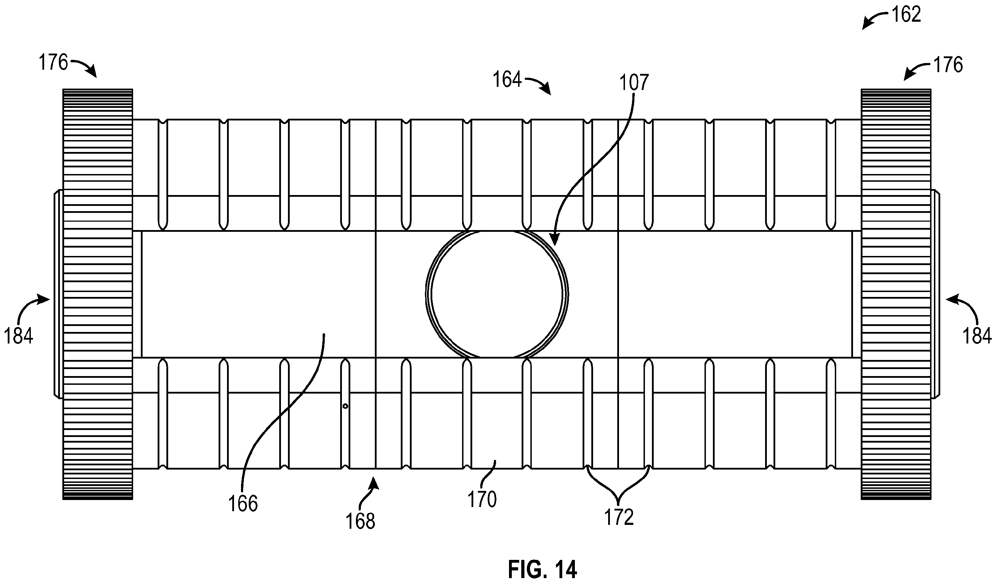

Referring to Figs. 11 to 18, another embodiment of the cleaning unit is shown where the cleaning unit 162 includes a main body 164 having generally semicircular shape and an upper surface 166 and a lower surface 168. The lower surface 168 of the main body 164 has a surface engagement body or skirt 170 having a plurality of slots 172 in communication with an internal vacuum chamber 174, where in operation, the skirt 170 is positioned adjacent to a surface of a wall inside of a storage container when the wheels 176 compress as described below. It should be appreciated that the slots 172 may extend along the entire lower surface 168 of the main body 164 or along a portion of the lower surface 168. It should also be appreciated that the skirt may be articulated in some applications. Similar to the above embodiments, the cleaning unit 162 includes a battery pack 58, a control unit 56 and a swivel connector 107 mounted on the upper surface 166 of the main body 164. The vacuum hose 28 is connected to the swivel connector 107 and generates a vacuum within the vacuum chamber 174.

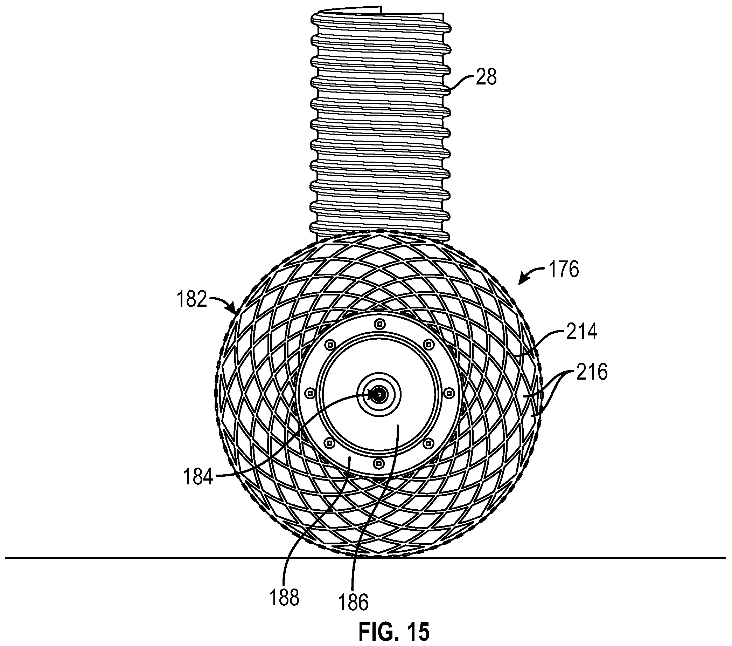

As shown in Figs. 15 to 17, the wheels 176 are each rotatably attached to the main body 164 by an axle 178 that is coupled to a drive motor 180. Each wheel 176 includes a tire 182 made with a compressible material, such as plastic resins (Thermal Polyurethane (TPU), Polyvinyl Chloride (PVC) or Polyethylene (PE)) formed into a compressible web structure by extrusion, 3D printing or subtractive processing, and a hub 184 including a hub body 186 and a connecting flange 188. The hub body 186 has an outer surface with a plurality of splines 190 and a conical inner surface 192, and a central through-hole 194 configured to receive one of the axles 178. As shown, each tire 182 includes a through-hole 193 and an inner surface having a plurality of splines 194. To secure the tire to the hub body, the hub body 186 is inserted through the through-hole 193 of the tire 182 so that the splines 194 on the inner surface of the tire matingly engage the splines 190 on the outer surface of the hub body 186. A circumferential flange 196 extends from the outer surface of the hub body 186 and engages a surface of the tire 182 when the hub body 186 is fully inserted into the through-hole 193 of the tire 182. The hub body 186 is secured to the tire 182 by the connecting flange 188. Specifically, the connecting flange 188 includes a plurality of spaced holes 198 that align with holes 200 on the hub body 186 where the connecting flange 188 is secured to the hub body 186 by inserting fasteners 202 through the holes 198 in the connecting flange 188 and the holes 200 in the hub body 186. An end of each axle 178, which has a bore 204 with threads, extends through the through-hole 193 in the hub body 186 when the hub body is secured to the tire 182. A cap 208 having a through-hole is placed over the end of the axle 178 and a washer 210 and fastener 212 secure the hub body 186 to the axle 178 by threadingly engaging the fastener 212 in the bore 204. To help secure the wheels 176 to an inner surface of a wall, the tires 182 of the wheels 176 each include a grid structure 214 with a plurality of openings 216 that enable air to be suctioned through the openings by the vacuum generated in the vacuum chamber 174 as shown in Fig. 17.

In operation, the vacuum generator 32 is activated (the power is turned on) and a vacuum is generated within the cleaning unit 162 via the vacuum hose 28. The cleaning unit 162 is inserted through an opening in a hatch of a storage container 22 of a bulk transport vehicle 24 (Fig. 1) and attached to an inner surface of a wall 26 of the storage container 22 by placing the skirt 170 and the wheels 176 against the inner surface. As shown in Fig. 17, the suction created within the vacuum chamber 174 causes air to be suctioned through the slots 172 in the skirt 170 and through the openings 216 in the wheels 176 adjacent to the inner surface of the wall, which causes the wheels 176 to compress and position the skirt 170 adjacent to the inner surface of the wall. The suction generated through the openings 216 in the wheels 176 and the slots 172 in the skirt 170 enable the cleaning unit 162 to securely attach to the inner surface of the wall. Also, the wheels 176 are compressed to a predefined limit to control vacuum balance within the cleaning unit 162 and to maintain grip on the inner surfaces of the walls during movement of the cleaning unit through different planes, i.e., corners and angular changes in the inner surfaces of the walls, of the storage container.

Once attached to the inner surface of the wall 26 of the storage container 22, the movement of the cleaning unit 162 is remotely controlled from outside the storage container 22 or from another remote location such as a control center. In an embodiment, a computer program (set of commands or instructions) is sent to the control unit 56 (processor) of the cleaning unit 162 to move the cleaning unit in predetermined directions and/or in predetermined patterns along the inner surfaces of the walls 26 of the storage container 22. As the cleaning unit 162 moves along the inner surfaces of the walls 26 of the storage container 22, the slots 172 in the skirt 170 vacuum (suction) and remove residual product and/or dust from the inner surfaces of the walls. As described above, the wheels 176 and the swivel connector 34 enable the cleaning unit 162, and more specifically, the slots 172 in the skirt 170 to remain substantially perpendicular to the inner surfaces of the walls 26 of the storage container 22 to effectively remove the residual product and/or dust from the inner surfaces. Furthermore, the configuration of the compressible wheels 176 enables the cleaning unit 162 to securely attach to and move along all of the inner surfaces of the walls 26 of the storage container 22 including bottom walls, sidewalls, top walls or ceilings where the walls may be straight walls and/or walls having different angles or planes.

While particular embodiments of the present cleaning system is shown and described, it will be appreciated by those skilled in the art that changes and modifications may be made thereto without departing from the invention in its broader aspects and as set forth in the following claims.

## Claims

1. A cleaning unit configured for cleaning at least one storage container of a bulk transport vehicle, the cleaning unit comprising:
a chassis having a swivel connection defining a through-hole and a vacuum chamber in communication with said through-hole;
an air intake member attached to said chassis and including a plurality of suction holes that extend to said vacuum chamber;
a pair of wheels movably attached to opposing sides of said chassis, said wheels each including a motor and a vacuum attachment zone; and
a processor on said chassis and coupled to said motor of each of said wheels,
wherein a vacuum is generated within said vacuum chamber and in the vacuum attachment zones of the wheels so that the wheels suction and attach to an inner surface of a wall of the at least one storage container and the processor causes the wheels to rotate to move the chassis in multiple directions along the inner surface of the wall while the air intake member suctions and removes residual material from the inner surface of the wall.

2. The cleaning unit of claim 1, further comprising a battery pack attached to the chassis, said battery pack configured to provide electrical power to the motors of the wheels and to the processor.

3. The cleaning unit of claim 1, wherein each of the wheels includes a hub body and a segmented tire attached to said hub body, said hub body being divided to form the vacuum attachment zone.

4. The cleaning unit of claim 1, wherein said chassis includes a central support member and opposing side support members attached to opposing sides of said central support member, one of said wheels being movably attached to each of said side support members.

5. The cleaning unit of claim 1, further comprising a vacuum hose attached to said swivel connection.

6. The cleaning unit of claim 5, wherein said swivel connection includes an upper connector and a bottom connector that combine to define a through-hole in communication with said vacuum chamber, wherein said vacuum hose is connected to said upper connector.

7. The cleaning unit of claim 1, wherein a front wheel assembly is attached to a front end of said chassis and a rear wheel assembly is attached to a rear end of said chassis, and wherein said front wheel assembly and said rear wheel assembly are each rotatably connected to said chassis.

8. The cleaning unit of claim 1, wherein each of said wheels includes a segmented tire having a plurality of openings, and a portion of said openings being in communication with said vacuum attachment zone.

9. The cleaning unit of claim 1, further comprising a vacuum hose and a collection bin, wherein said vacuum hose is connected to said swivel connection and generates a vacuum within said vacuum chamber so that said air intake member suctions and removes residual material from an inner surface of said wall and removed residual material moves through said vacuum hose to said collection bin for recycling or disposal at a later time.

10. The cleaning unit of claim 1, wherein the wheels are made with a compressible material and include a plurality of openings.

11. A cleaning system configured for cleaning at least one storage container of a bulk transport vehicle, the cleaning system comprising:
a plurality of cleaning units, said cleaning units each including
a chassis having a swivel connection defining a through-hole and a vacuum chamber in communication with said through-hole;
an air intake member attached to said chassis and including a plurality of suction holes that extend to said vacuum chamber;
a pair of wheels movably attached to opposing sides of said chassis, said wheels each including a motor and a vacuum attachment zone; and
a processor on said chassis and coupled to said motor of each of said wheels,
wherein a vacuum is generated within said vacuum chamber and in the vacuum attachment zones of the wheels of each of said cleaning units so that the wheels of each of said cleaning units suctions and attaches to an inner surface of a wall of the at least one storage container and the processor causes the wheels to rotate to move the chassis of each cleaning unit in multiple directions along the inner surfaces of the walls of the at least on storage container while the air intake member of each cleaning unit suctions and removes residual material from the inner surfaces of the walls.

12. The cleaning system of claim 11, wherein each of the wheels includes a hub body and a segmented tire attached to said hub body, said hub body being divided to form the vacuum attachment zone.

13. The cleaning system of claim 11, wherein each of said wheels includes a segmented tire having a plurality of openings, and a portion of said openings being in communication with said vacuum attachment zone.

14. The cleaning system of claim 11, wherein the wheels are made with a compressible material and include a plurality of openings.
